# EUROPEAN PATENT APPLICATION

(11) **EP 2 471 959 A1**
(43) Date of publication of application: **04.07.2012**
(21) Application number: 10812031.2
(22) Date of filing: 23.08.2010
(51) Int. Cl.: C21C 5/52, F27B 3/28, F27D 17/00, F27D 19/00, F27D 21/00, H05B 7/144, H05B 7/148

(54) **ARC MELTING FACILITY, AND METHOD FOR MANUFACTURING MOLTEN METAL USING THE ARC MELTING FACILITY**

(30) Priority: 27.08.2009 JP 2009196451
(71) Applicant: JP Steel Plantech Co., Yokohama-shi, Kanagawa-ken 221-0056 (JP)
(72) Inventor: MIKAMI, Yasuki, Yokohama-shi Kanagawa 221-0056 (JP); MATSUO, Takato, Yokohama-shi Kanagawa 221-0056 (JP)
(74) Representative: HOFFMANN EITLE
(86) International application number: PCT/JP2010/064659
(87) International publication number: WO 2011/024982

(57) **Abstract**

A source iron is continuously fed into an electric arc furnace is melted therein, while a state change of the source iron fed in the furnace is detected to maintain the molten metal in the electric arc furnace in a stable state. An electric arc melting facility 22 includes a melting chamber 1 configured to melt a source iron 20 therein by electric arc discharge generated from an electrode 2, and a source iron feeder 8 configured to continuously feed the source iron to the melting chamber. The facility further includes a state change detector 12a, 12b, 12c configured to detect a state change of the melting chamber when the electric arc discharge is generated from the electrode, and a controller 6 configured to adjust a feed rate at which the source iron feeder feeds the source iron to the melting chamber, based on a detection result of the state change detectors.

## Description

### [Technical Field]

The present invention relates to an electric arc melting facility that produces molten metal by continuously feeding a source iron, such as iron scrap or direct-reduced iron, and melting the source iron by means of an electric arc, and also relates to a method for producing molten metal by using the electric arc melting facility.

### [Background Art]

A batch type electric furnace that melts and refines a source iron, such as scrap, uses a method of opening a furnace roof arranged on an upper side of the furnace and charging the scrap to be processed into the furnace by using a basket. When the furnace roof is opened, melting work may be temporarily interrupted. Further, opening the furnace roof may cause a large heat loss and raise dust that adversely affects environment. On the other hand, another type electric furnace has been proposed, which is capable of continuously feeding scrap to a furnace without opening a furnace roof when charging the scrap (see Patent Document 1 and Patent Document 2, for example).

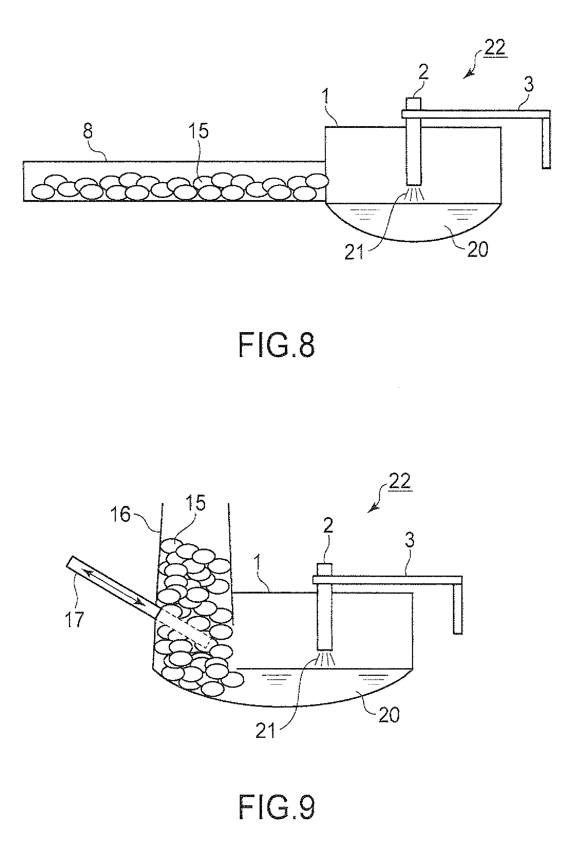

FIG. 8 is a schematic diagram showing a configuration of a scrap-continuous-feed type electric furnace (electric arc melting facility 22) as proposed in Patent Document 1. A scrap charge port is formed on a side surface of an electric furnace (melting chamber) 1 and is connected to a scrap feeder (source iron feeder) 8 to continuously feed scrap (source iron) 15 into the furnace.

FIG. 9 is a schematic diagram showing a configuration of another scrap-continuous-feed type electric furnace (electric arc melting facility 22) as proposed in Patent Document 2. A preheating chamber 16 is directly connected to a side surface of an electric furnace 1 and is equipped with a pusher (pushing device) 17 to be inserted into and retracted from the preheating chamber 16 to feed scrap 15 into the electric furnace 1.

The electric furnace of the type that continuously feeds the scrap keeps molten metal in its inside to melt the fed scrap by the energy of the molten metal. Energy to be applied from outside is used for maintaining the temperature of the molten metal, so that the temperature of the molten metal is adjusted to be held at a temperature higher than a melting point of the scrap. Therefore, an important factor of the electric furnace that continuously feeds the scrap is to keep balance between the scrap feed rate and the molten metal temperature, i.e., the energy supplied for melting.

In light of this factor, there is known a method for operating an electric furnace that continuously feeds scrap, as follows (see Patent Document 3, for example): In a scrap-continuous-feed type electric arc furnace, a total amount of in-furnace molten metal is calculated from a cumulative amount of charged scrap, and is used along with a measured temperature value of the molten metal to accurately estimate the temperature of the molten metal after the scrap is charged. Based on this estimation, the scrap feed rate is controlled so that the temperature of the molten metal falls within a proper temperature range.

### [Prior Art Document]

### [Patent Document]

[Patent Document 1]
   Jpn. Pat. Appln. KOHYO Publication No. 61-502899
[Patent Document 2]
   Jpn. Pat. Appln. KOKAI Publication No. 11-257859
[Patent Document 3]
   Jpn. Pat. Appln. KOKAI Publication No. 7-286208

### [Summary of Invention]

### [Technical Problem]

According to the method described in Patent Document 3, the in-furnace molten metal amount can be estimated with accuracy to a certain degree, and the speed of a scrap transfer device can be controlled in accordance with the estimated in-furnace molten metal amount. However, this method has a drawback such that, the state in the electric arc furnace is not actually observed, and so the source iron feed rate and the energy supplied to an electric furnace may not be optimally adjusted.

More specifically, there are various types of scrap to be fed to the electric furnace, as they may contain many different components other than iron. When such various types of scrap are charged and melted, the amounts of molten metal produced therefrom may differ depending on the type of scrap. Therefore, the amount of the in-furnace molten metal estimated by the calculation from the amount of the charged scrap may greatly differ from the actual amount of molten metal in refining. Thus, the estimated temperature of the molten metal may also differ from the actual temperature.

Further, for example, in a case where scrap pieces different in shape or in bulk density are fed, the amount of the scrap fed over a long period of time can be estimated, but the amount of the scrap actually fed into the furnace may vary in a short period of time. If a large amount of scrap is fed in a short period of time, the balance with respect to the feed energy for melting may be disordered, and the scrap may be stacked in the furnace. In order to melt the stacked scrap, it is necessary to supply a large amount of energy and also to prolong a melting time. It is thus important to control the scrap charge rate in an appropriate balance with the scrap melting rate in the electric arc furnace so as to smoothly perform melting.

Accordingly, it is preferable to continuously measure an amount of source iron that has been fed to the electric furnace and not yet melted and an amount of molten metal, from time to time, and to adjust the source iron feed rate and the energy supplied to the electric furnace, in accordance with the measured amounts. However, if the state of the source iron varies with time as described above, it is practically difficult to continuously measure the amount of source iron and the amount of molten metal in the electric furnace.

An object of the present invention is to solve the problems of the conventional techniques described above for electric furnaces, particularly in a case where an electric arc furnace is used for a melting chamber. Specifically, an object is to provide an electric arc melting facility and a method of operating the electric arc melting facility configured to continuously feed a source iron into the electric arc furnace and melt it therein, while detecting a state change of the source iron fed in the furnace to maintain the molten metal in the electric arc furnace in a stable state.

### [Solution to Problem]

According to an aspect of the present invention, there is provided an electric arc melting facility comprising a melting chamber configured to melt a source iron therein by electric arc discharge generated from an electrode, and a source iron feeder configured to continuously feed the source iron to the melting chamber. The electric arc melting facility further comprises a state change detector configured to detect a state change of the melting chamber when the electric arc discharge is generated from the electrode, and a controller configured to adjust a feed rate at which the source iron feeder feeds the source iron to the melting chamber, based on a detection result of the state change detector.

With this aspect of the present invention, when the source iron is continuously fed to an electric arc furnace that serves as the melting chamber to produce molten metal, the state change of the source iron in the furnace is quickly detected, and the feed rate of the source iron can be adjusted in accordance with the detection result. Accordingly, the molten metal in the electric arc furnace can be maintained in a stable state.

Further, according to an aspect of the present invention, the state change detector may be configured to detect a variation in at least one of current and voltage applied to the electrode, as the state change of the melting chamber.

In this way, as the state change of the melting chamber, a variation in at least one of current and voltage applied to the electrode is used to quickly and indirectly detect the state change of the source iron in the furnace, so that the feed rate of the source iron can be adjusted in accordance with the detection result.

Further, according to an aspect of the present invention, the state change detector may be configured to detect a variation in at least one of amounts of harmonics contained in the current and the voltage, as the variation in at least one of the current and the voltage applied to the electrode.

In this way, as the state change of the melting chamber, or as the variation in at least one of the current and the voltage applied to the electrode, a variation in at least one of amounts of harmonics contained in the current and the voltage is used to quickly and indirectly detect the state change of the source iron in the furnace, so that the feed rate of the source iron can be adjusted in accordance with the detection result.

Further, according to an aspect of the present invention, the state change detector may be configured to detect a value of or a variation per unit time in at least one of the current and the voltage, as the variation in at least one of the current and the voltage applied to the electrode.

In this way, as the state change of the melting chamber, a value of or a variation per unit time in at least one of the current and the voltage applied to the electrode is used to quickly and indirectly detect the state change of the source iron in the furnace, so that the feed rate of the source iron can be adjusted in accordance with the detection result.

Further, according to an aspect of the present invention, the state change detector may be configured to detect a variation in vibration of the furnace body transmitted to the melting chamber when the electric arc discharge is generated, as the state change of the melting chamber.

In this way, as the state change of the melting chamber, a variation in vibration of the furnace body transmitted to the melting chamber when the electric arc discharge is generated is used to quickly and indirectly detect the state change of the source iron in the furnace, so that the feed rate of the source iron can be adjusted in accordance with the detection result.

Further, according to an aspect of the present invention, the state change detector may be configured to detect a variation in position of the electrode as the state change of the melting chamber.

In this way, as the state change of the melting chamber, a variation in position of the electrode is used to quickly and indirectly detect the state change of the source iron in the furnace, so that the feed rate of the source iron can be adjusted in accordance with the detection result.

Further, according to an aspect of the present invention, there is provided a method for producing molten metal while melting the source iron by using the electric arc melting facility described above. The method comprises a state change detecting step of detecting a state change of the melting chamber when the electric arc discharge is generated, and a feed rate adjusting step of adjusting a feed rate at which the source iron is fed to the melting chamber, based on a detection result in the state change detecting step.

With this aspect of the present invention, when the source iron is continuously fed to an electric arc furnace that serves as the melting chamber to produce molten metal, the state change of the source iron in the furnace is quickly detected, and the feed rate of the source iron can be adjusted in accordance with the detection result. Accordingly, the molten metal can be produced while the molten metal in the electric arc furnace is maintained in a stable state.

Further, according to an aspect of the present invention, the method for producing the molten metal may further comprises adjusting an electric power applied to the electrode, in addition to the feed rate, based on a detection result by the state change detector.

In this way, the electric power applied to the electrode of the electric arc furnace is adjusted in addition to the feed rate of the source iron, so that the state of the molten metal can be further stably controlled.

The method for producing the molten metal may further comprises a source iron feeding step of driving a pushing device disposed at a lower side of a preheating chamber, which is configured to preheat the source iron therein, to feed the source iron from the preheating chamber to the melting chamber, a source iron preheating step of introducing exhaust gas generated in the melting chamber into the preheating chamber to preheat the source iron in the preheating chamber, and a source iron melting step of melting the source iron with heat generated by the electric arc discharge in the melting chamber while feeding the source iron to the preheating chamber so as to maintain a state in which the source iron is present in the preheating chamber and the melting chamber.

Consequently, the productivity is further improved, while the efficiency of heat recovery from the exhaust gas is increased and the energy efficiency can be thereby sufficiently increased.

### [Advantageous Effects of Invention]

According to the present invention, when the source iron, such as iron scrap, is continuously fed to the electric arc furnace to produce the molten metal, the state change of the source iron in the furnace can be quickly detected in an indirect manner. Further, by adjusting an operation condition in accordance with the detection, the molten metal in the furnace can be maintained in a stable state. Accordingly, an operation with high energy efficiency can be performed without prolonging the melting time of the source iron.

### [Brief Description of Drawings]

[FIG. 1] This is a flowchart showing a general operation of a method for producing molten metal by using an electric arc melting facility according to an embodiment of the present invention.
[FIG. 2] This is an explanatory view showing detection of current and voltage harmonics along with a scrap feeder control circuit according to an embodiment of the present invention.
[FIG. 3] This is an explanatory view showing detection of current and voltage along with a scrap feeder control circuit according to an embodiment of the present invention.
[FIG. 4] This is an explanatory view showing detection of scrap by using vibration of a furnace body along with a scrap feeder control circuit according to an embodiment of the present invention.
[FIG. 5] This is an explanatory view showing detection of an electrode position along with a scrap feeder control circuit according to an embodiment of the present invention.
[FIG. 6] This is a graph showing changes with time in scrap feed rate and harmonic distortion ratio. (An example of the present invention)
[FIG. 7] This is a graph showing changes with time in scrap feed rate and harmonic distortion ratio. (A comparative example)
[FIG. 8] This is a schematic diagram showing a conventional scrap-continuous-feed type electric furnace.
[FIG. 9] This is a schematic diagram showing another conventional scrap-continuous-feed type electric furnace.

### [Best Mode for Carrying Out the Invention]

Preferred embodiments of the present invention will be described below in detail. The embodiments described below are not intended to improperly limit the scope of the present invention described in the claims. It is not always necessary to include all of the features described in each of the embodiments to provide the solution according to the present invention.

As described above, when a source iron is continuously fed into an electric arc furnace (a melting chamber) to produce molten metal, it is difficult to directly observe a state of the source iron and a state of the molten metal in the electric arc furnace. In order to address the above-described problems, close attention has been paid to the following phenomenon in the present invention: When an amount of source iron in the furnace is increased and the source iron comes into a state where part of the source iron is present on the surface of the molten metal near an electrode, an electric arc is generated from the electrode to the part of the source iron present on the surface of the molten metal near the electrode. At this time, noticeable changes appear in state factors that affect a state of the melting chamber, wherein the state factors include amounts of harmonics contained in current, amounts of harmonics contained in voltage, a variation in current, a variation in voltage, a variation in position of the electrode, and vibration of the furnace body. Further, in the process of developing the present invention, the following matters have been found: When a source iron is excessively fed into the electric arc furnace and so the source iron is not completely melted but partly remains on the surface of the molten metal near the electrode, generation of electric arc discharge from the electrode of the electric arc furnace to the part of the source iron remaining on the surface of the molten metal can be indirectly detected by detecting the above-described state changes of the melting chamber. Then, the feed rate of the source iron to the electric arc furnace can be adjusted in accordance with the presence or absence of the detection of the electric arc discharge, so that the state in the furnace is maintained stable. It should be noted that, in this specification, changes in state factors that affect changes in the state of the melting chamber are each described as the "a state change of the melting chamber", wherein the state factors include amounts of harmonics contained in current, amounts of harmonics contained in voltage, a variation in current, a variation in voltage, a variation in position of the electrode, and vibration of the furnace body.

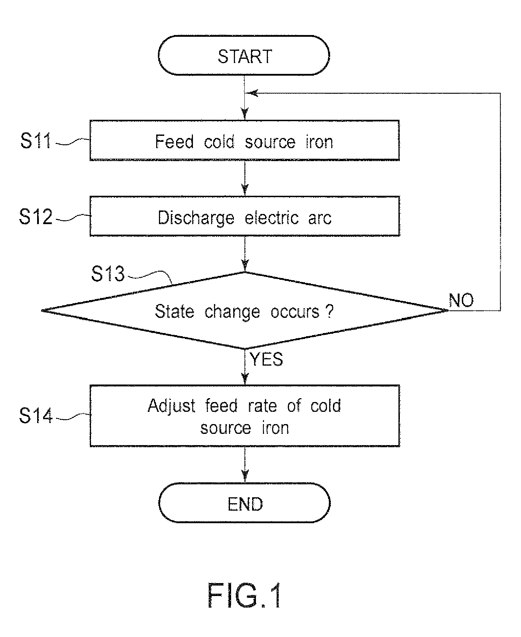

A method for producing molten metal by using an electric arc melting facility according to the present invention is described with reference to the drawings. FIG. 1 is a flowchart showing a general operation of a method for producing molten metal by using an electric arc melting facility according to an embodiment of the present invention.

A source iron is continuously fed to a melting chamber (a source iron feeding step S11), and the source iron is melted by electric arc discharge generated from an electrode (a source iron melting step S12). Then, a state change of the melting chamber when the electric arc discharge is generated is detected (a state change detecting step S13). As described above, if the state of the source iron is changed every moment, it is practically difficult to continuously measure the amounts of source iron and molten metal in the electric furnace. Accordingly, this embodiment is made to detect a state change of the melting chamber so as to indirectly detect generation of the electric arc discharge to the source iron remaining on the surface of the molten metal. When occurrence of a state change is detected in the state change detecting step S13, the feed rate for feeding the source iron to the melting chamber is adjusted (a feed rate adjusting step S14).

With respect to detection of the generation of the electric arc discharge from the electrode of the electric arc furnace to the source iron remaining on the surface of the molten metal in the furnace, the state change detecting step S13 measures, as the state change of the electric arc furnace (the melting chamber), at least one of vibration of the furnace body, a variation in position of the electrode, a variation in current, a variation in voltage, amounts of harmonics contained in current, and amounts of harmonics contained in voltage, and detects a change of such a measured value. Then, the feed rate adjusting step S14 adjusts the feed rate of the source iron by using at least one of a plurality of state changes, or a combination thereof, of the melting chamber detected by the state change detecting step S13. Specifically, the feed rate adjusting step S14 stops the feed of the source iron to the melting chamber when the state change detecting step S13 detects, on the basis of a variation in amounts of harmonics, the electric arc discharge generated to the source iron remaining on the surface of the molten metal due to the excessively fed source iron. Alternatively, in order to resolve the state in which the source iron excessively remains in the melting chamber, the feed rate of the source iron may be controlled to be decreased. Further, in order to accurately detect the state change of the melting chamber, the detection may preferably be made based on a plurality of detection results from among the above-described respective state changes of the melting chamber. Particularly, the amount of a harmonic contained in current or voltage is preferably used because detection is easily carried out and a change is detected properly. Specifically, the amount of a harmonic is given based on harmonics obtained through frequency analysis on a result of measurements of current or voltage fed to the electric arc furnace, and may be used in a form of a harmonic distortion ratio.

An example of the electric arc melting facility used in the present invention comprises an electric arc furnace, a source iron feeder that continuously feeds a source iron to the electric arc furnace, a detector for a state change of a melting chamber, and a controller that adjusts the feed rate of the source iron feeder by using an output from the detector. The detector for a state change of the melting chamber is a device that can detect a generation of the electric arc discharge from an electrode of the electric arc furnace to the source iron fed into the electric arc furnace.

Alternatively, the electric power applied to the electric arc furnace may be adjusted instead of the control on the feed rate of the source iron. However, if the arc electric power is increased without the feed rate being changed, a source iron newly fed needs to be melted in addition to melting of the source iron already present in the furnace. In this case, a large electric power is required, and thereby makes it impossible to attain an operation with high energy efficiency, which is an object of the present invention. However, it is possible to control both the feed rate of the source iron and the electric power applied to the electric arc furnace by using the detected state of the source iron.

For example, the present invention may be applied to an electric arc melting facility of the type as described in Patent Document 2, which comprises a melting chamber configured to melt a source iron therein, a shaft-type preheating chamber directly connected to the melting chamber and configured to preheat the source iron to be fed to the melting chamber, an electrode disposed in the melting chamber to melt the source iron fed in the melting chamber, and a pushing device disposed at a lower side of the preheating chamber and configured to move the source iron, fed from the preheating chamber, toward the electrode. In this facility, the present invention can be applied to an operation of melting the source iron by electric arc heating in the melting chamber, while introducing exhaust gas generated in the melting chamber into the preheating chamber to preheat the source iron in the preheating chamber, and feeding the source iron to the melting chamber so as to maintain a state in which the source iron is present in the preheating chamber and the melting chamber. Such an application is particularly preferable, because it is possible to sufficiently improve the energy efficiency without deteriorating the productivity. In this case, a control mechanism is provided to a driving device of the pushing device to control the feed rate of the source iron.

If the above-described electric arc melting facility is used, the source iron is fed by using the pushing device, and so the pushing device needs to be returned to the pushing start position each time when the pushing operation is completed. That is, the feed is not necessarily performed in a completely continuous manner. However, even when the feed is not necessarily performed in a completely continuous manner but repeatedly performed at predetermined intervals, the feed of the source iron to the electric arc furnace is regarded as a continuous operation. A not-continuous-feed means a feed performed in a manner that the source iron is, for example, collectively dropped by using a basket etc. like a batch feed, and the feed cannot be stopped in the middle of a single feed of the source iron to the electric arc furnace after it is once started.

The source iron is an object, such as iron scrap or direct-reduced iron, to be subjected to the melting process in the electric arc melting facility. The iron scrap includes, for example, stainless steel scrap, pig iron, mill scales, or rerollable scrap. The iron scrap is generated, for example, when steelmaking or other processes are performed by steelmakers, when processes using iron products are performed in factories, or when buildings, automobiles, electrical appliances, bridges, etc., are knocked down.

Next, respective embodiments according to the present invention will be described in detail with reference to the drawings. In the specification and drawings, constituent elements having substantially the same functional structures are denoted by the same reference numerals, and redundant explanations thereof are thus omitted.

### (First Embodiment)

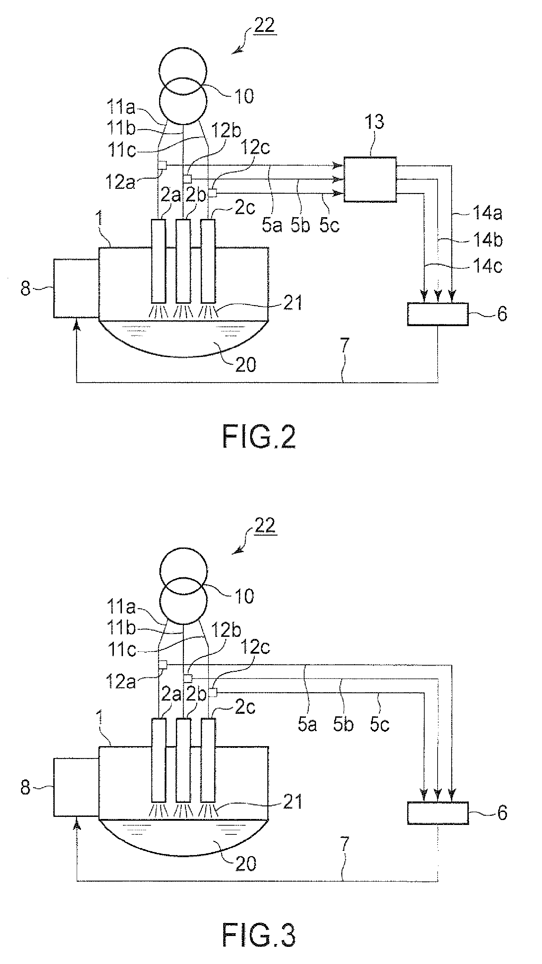

FIG. 2 is an explanatory view showing a general configuration of an electric arc melting facility according to a first embodiment of the present invention, and shows a case in which the state of scrap inside a furnace is detected by using harmonics in current or voltage applied to electric arc melting. In this embodiment, an electric sensor 12 (12a, 12b, and 12c) serving as a state change detector for detecting a state change of a melting chamber 1 is connected to a power feed line 11 (11a, 11b, and 11c) extending to an electric arc furnace 1, to measure a current waveform or a voltage waveform of the power feed line 11. The measured waveform is subjected to Fourier transform by a signal processor 13 to calculate harmonics contained therein, and the result is input to a controller 6 as a signal-processed state signal 14 (14a, 14b, and 14c). If the source iron is excessively fed in the furnace and comes to be present near an electrode, an electric arc is generated from the electrode to the source iron, and the harmonics in current or voltage are caused to vary. If the signal-processed state signal 14 has a value or a variation per unit time not smaller than a predetermined value, the controller 6 sends a control signal 7 to a scrap feeder 8, which serves as a source iron feeder, to decrease the scrap feed rate or to stop the feed. Then, if the measurement value is decreased to another predetermined value, the controller 6 sends a control signal 7 to the scrap feeder 8 to increase the scrap feed rate to a predetermined rate.

When the in-furnace scrap state is detected by using the harmonics in current or voltage applied to the electric arc melting, a harmonic distortion ratio is preferably used as the signal-processed state signal 14. Specifically, the harmonic distortion ratio is continuously measured, and two threshold values (harmonic judgment values) are set such that a higher threshold value serves as a harmonic judgment value H and a lower threshold value serves as a harmonic judgment value L. The harmonic judgment value H is set to such a value that the harmonic distortion ratio exceeds the harmonic judgment value H if an abnormal event occurs during melting of the source iron in the electric arc furnace such that the source iron comes to be present near the electrode. The harmonic judgment value L is set to such a value that the harmonic distortion ratio falls below the harmonic judgment value L if melting of the source iron progresses and the furnace comes to have a flat bath state therein. In this way, the source iron feed rate is controlled to be decreased if the harmonic distortion ratio exceeds the harmonic judgment value H, and increased if the harmonic distortion ratio falls below the harmonic judgment value L. Consequently, even if an abnormal event occurs such that the source iron is excessively fed into the furnace, the state is immediately restored to a normal state, and the production of molten metal can be continued in a stable state.

### (Second Embodiment)

FIG. 3 is an explanatory view showing a general configuration of an electric arc melting facility according to a second embodiment of the present invention, and shows a case in which the state of scrap inside a furnace is detected by using current or voltage applied to electric arc melting. In this embodiment, an electric sensor 12 (12a, 12b, and 12c) serving as a state change detector for detecting a state change of a melting chamber 1 is connected to a power feed line 11 (11a, 11b, and 11c) extending to an electric arc furnace 1, to measure current or voltage of the power feed line 11. If the source iron is excessively fed in the furnace and comes to be present near an electrode, an electric arc is generated from the electrode to the source iron, and the current or voltage is caused to vary. A state signal 5 (5a, 5b, and 5c) of the electric sensor 12 is input to a controller 6. If the current or voltage of the power feed line 11 has a value or a variation per unit time not smaller than a predetermined value, the controller 6 sends a control signal 7 to a scrap feeder 8, which serves as a source iron feeder, to decrease the scrap feed rate or to stop the feed. Then, if the measurement value is decreased to another predetermined value, the controller 6 sends a control signal 7 to the scrap feeder 8 to increase the scrap feed rate to a predetermined rate.

### (Third Embodiment)

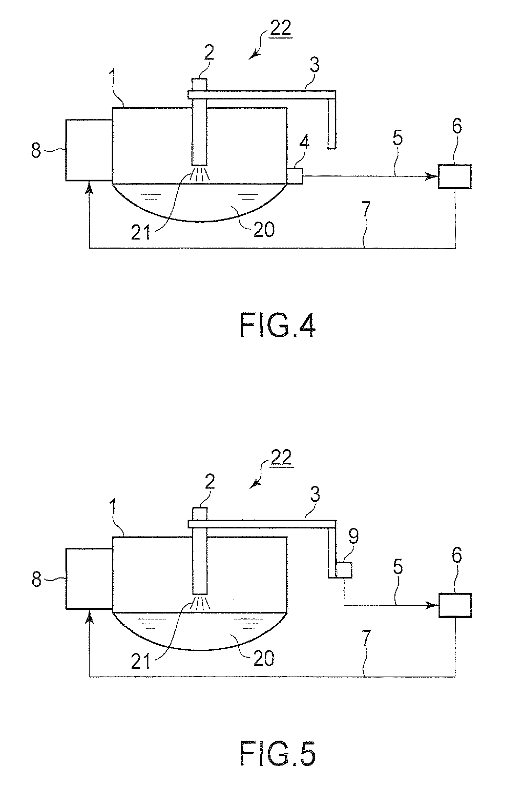

FIG. 4 is an explanatory view showing a general configuration of an electric arc melting facility according to a third embodiment of the present invention, and shows a case in which the state of source iron inside a furnace is detected by using vibration of a furnace body. In this embodiment, an acceleration sensor 4 (a state change detector) serving as a state change detector for detecting a state change of a melting chamber 1 is attached to an electric arc furnace body (a melting chamber) 1. The acceleration sensor 4 continuously measures vibration of the furnace body, and inputs a state signal 5 of the vibration to a controller 6. If the source iron is excessively fed into the furnace and comes to be present near an electrode, an electric arc is generated from the electrode to the source iron, and vibration of the furnace body is caused to vary. If the measurement value of the acceleration sensor 4 exceeds a predetermined value, the controller 6 sends a control signal 7 to a scrap feeder 8, which serves as a source iron feeder, to decrease the scrap feed rate or to stop the feed. Then, if the measurement value is decreased to another predetermined value, the controller 6 sends a control signal 7 to the scrap feeder 8 to increase the scrap feed rate to a predetermined rate. Consequently, the state in which the source iron is excessively fed into the furnace is immediately resolved and a stable operation can be continued.

### (Fourth Embodiment)

FIG. 5 is an explanatory view showing a general configuration of an electric arc melting facility according to a fourth embodiment of the present invention, and shows a case in which the state of scrap inside a furnace is detected by using a variation in position of an electrode. In this embodiment, an electrode position detector 9 serving as a state change detector for detecting a state change of a melting chamber 1 is attached to a movable portion of an electrode elevator 3 for the electrode. The electrode position detector 9 continuously measures an electrode position, and inputs a result signal to a controller 6. If the source iron is excessively fed into the furnace and comes to be present near the electrode, an electric arc is generated from the electrode to the source iron, and variations in current and voltage become large. At this time, the variation in the position of the electrode is increased so as to change the current value to a set value. If the variation in the position of the electrode per unit time exceeds a predetermined value, the controller 6 sends a control signal 7 to a scrap feeder 8, which serves as a source iron feeder, to decrease the scrap feed rate or to stop the feed. Then, if the measurement value is decreased to another predetermined value, the controller 6 sends a control signal 7 to the scrap feeder 8 to increase the scrap feed rate to a predetermined rate.

In the above-described embodiments, the melting state of the source iron is controlled by changing the source iron feed rate, but the state of molten metal can be controlled in a more stable manner by further adjusting the electric power applied to the electric arc furnace in addition to the feed rate.

Further, as described above, each of amounts of harmonics contained in current, amounts of harmonics contained in voltage, a variation in current, a variation in voltage, vibration of the furnace body, and a variation in position of the electrode can be individually used for detecting the state of the source iron. However, a combination of two or more of them may be used, so that the scrap state is figured out more correctly and the state in the furnace can be stabled more reliably. For example, a variation in the electric arc current is used along with the amount of harmonics contained in the electric arc current to detect the scrap state.

### [Example 1]

A melting test for iron scrap was performed by using the electric arc melting facility shown in FIG. 2.

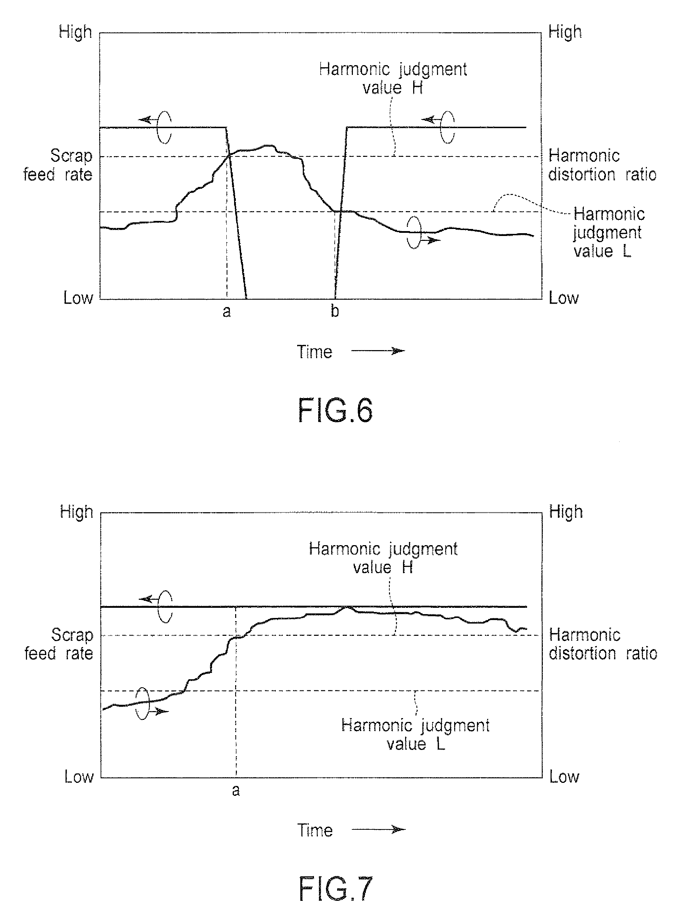

FIG. 6 shows an example in which the harmonics in current fed to the electrode were measured and the scrap feed rate was changed in the method for producing molten metal by using the electric arc melting facility according to the first embodiment described above. The scrap was fed to the electric arc furnace at a constant rate and a harmonic distortion ratio was obtained by a harmonic analyzer disposed at each measurement point of the electric arc current. It should be noted that the harmonic distortion ratio represents a percentage of the sum of effective values of all generated harmonics with respect to an effective value of a reference frequency.

The present example is configured to determine that scrap comes to be present near the electrode inside the furnace, when the harmonic distortion ratio exceeds a predetermined value (the harmonic judgment value H), and to stop the scrap feed. As the scrap inside the furnace is increased, the harmonic distortion ratio is also increased. If the scrap feed is stopped when the value exceeds the harmonic judgment value H (time "a" in FIG. 6), the scrap melting progresses and the harmonic distortion ratio is caused to be gradually decreased. The decrease in harmonic distortion ratio represents a state in which an electric arc is generated to molten metal and the scrap is not present near the electrode any more.

When the harmonic distortion ratio is detected as being decreased to a predetermined value (the harmonic judgment value L) (time "b" in FIG. 6), the scrap feed is restarted at a predetermined rate. In this way, the state change inside the furnace was quickly detected, and the state was immediately restored to a normal state, so that the scrap melting was continued.

FIG. 7 shows a comparative example relative to the present invention, and shows a case in which the scrap feed rate is not changed even if a harmonic distortion ratio of the electric arc current is increased. If the present invention is used, the scrap feed is stopped or decreased in feed rate at a time "a" in FIG. 7. However, since the scrap was continued to be fed, the scrap amount in the furnace was increased, and the harmonic distortion ratio was increased, so that this state was being continued. That is, the scrap was not completely melted and kept remaining. Since the operation was continued under this condition, an excessive amount of energy was required, and a melting time was also greatly prolonged. Consequently, the energy efficiency was lowered, and the productivity was deteriorated.

Although various preferable embodiments of the present invention have been described above with reference to the accompanying drawings, the present invention is not limited to the above-described embodiments. It is obvious to those skilled in the art that various alterations and modifications can be made within the scope described in the claims, and that such alterations and modifications also belong to the technical scope of the present invention, as a matter of course.

### [Reference Signs List]

1 electric arc furnace (melting chamber)
2 (2a, 2b, 2c) electrode
3 electrode elevator
4 acceleration sensor (state change detector)
5 (5a, 5b, 5c) state signal
6 controller
7 control signal
8 scrap feeder (source iron feeder)
9 electrode position detector (state change detector)
10 power supply
11 (11a, 11b, 11c) power feed line
12 (12a, 12b, 12c) electric sensor (state change detector)
13 signal processor
14 (14a, 14b, 14c) signal-processed state signal
15 scrap (source iron)
16 preheating chamber
17 pushing device
20 molten metal
21 electric arc
22 electric arc melting facility

## Claims

1. An electric arc melting facility comprising a melting chamber configured to melt a source iron therein by electric arc discharge generated from an electrode, and a source iron feeder configured to continuously feed the source iron to the melting chamber,
wherein the electric arc melting facility further comprises:
a state change detector configured to detect a state change of the melting chamber when the electric arc discharge is generated from the electrode; and
a controller configured to adjust a feed rate at which the source iron feeder feeds the source iron to the melting chamber, based on a detection result of the state change detector.

2. The electric arc melting facility according to claim 1, wherein the state change detector is configured to detect a variation in at least one of current and voltage applied to the electrode, as the state change of the melting chamber.

3. The electric arc melting facility according to claim 2, wherein the state change detector is configured to detect a variation in at least one of amounts of harmonics contained in the current and the voltage, as the variation in at least one of the current and the voltage applied to the electrode.

4. The electric arc melting facility according to claim 2, wherein the state change detector is configured to detect a value of or a variation per unit time in at least one of the current and the voltage, as the variation in at least one of the current and the voltage applied to the electrode.

5. The electric arc melting facility according to claim 1, wherein the state change detector is configured to detect a variation in vibration of the furnace body transmitted to the melting chamber when the electric arc discharge is generated, as the state change of the melting chamber.

6. The electric arc melting facility according to claim 1, wherein the state change detector is configured to detect a variation in position of the electrode, as the state change of the melting chamber.

7. A method for producing molten metal while melting the source iron by using the electric arc melting facility according to any of claims 1 to 6, the method comprising:
a state change detecting step of detecting a state change of the melting chamber when the electric arc discharge is generated; and
a feed rate adjusting step of adjusting a feed rate at which the source iron is fed to the melting chamber, based on a detection result of the state change detecting step.

8. The method for producing the molten metal by using the electric arc melting facility, according to claim 7, wherein the method further comprises a feed-power adjusting step of adjusting an electric power applied to the electrode, in addition to the feed rate adjusting step of adjusting the feed rate, based on a detection result of the state change detecting step.

9. The method for producing the molten metal by using the electric arc melting facility, according to claim 7, wherein the method further comprises:
a source iron feeding step of driving a pushing device disposed at a lower side of a preheating chamber, which is configured to preheat the source iron therein, to feed the source iron from the preheating chamber to the melting chamber;
a source iron preheating step of introducing exhaust gas generated in the melting chamber into the preheating chamber to preheat the source iron in the preheating chamber; and
a source iron melting step of melting the source iron with heat generated by the electric arc discharge in the melting chamber while feeding the source iron to the preheating chamber so as to maintain a state in which the source iron is present in the preheating chamber and the melting chamber.

10. The method for producing the molten metal by using the electric arc melting facility, according to claim 8, wherein the method further comprises:
a source iron feeding step of driving a pushing device disposed at a lower side of a preheating chamber, which is configured to preheat the source iron therein, to feed the source iron from the preheating chamber to the melting chamber;
a source iron preheating step of introducing exhaust gas generated in the melting chamber into the preheating chamber to preheat the source iron in the preheating chamber; and
a source iron melting step of melting the source iron with heat generated by the electric arc discharge in the melting chamber while feeding the source iron to the preheating chamber so as to maintain a state in which the source iron is present in the preheating chamber and the melting chamber.
